# EUROPEAN PATENT SPECIFICATION

(11) **EP 3 322 149 B1**
(45) Date of publication and mention of the grant of the patent: **13.09.2023**
(21) Application number: 17162247.5
(22) Date of filing: 22.03.2017
(51) Int. Cl.: H04L 67/52

(54) **CUSTOMIZED MAP GENERATION WITH REAL TIME MESSAGES AND LOCATIONS FROM CONCURRENT USERS**
ERZEUGUNG VON PERSONALISIERTEN LANDKARTEN MIT ECHTZEITNACHRICHTEN UND STANDORTEN VON GLEICHZEITIGEN BENUTZERN
GÉNÉRATION D'UNE CARTE PERSONNALISÉE AU MOYEN DE MESSAGES EN TEMPS RÉEL ET D'EMPLACEMENTS D'UTILISATEURS CONCURRENTS

(30) Priority: 10.11.2016 IN 201621038395
(43) Date of publication of application: 16.05.2018
(73) Proprietor: Tata Consultancy Services Limited, Maharashtra (IN)
(72) Inventor: KUMAR, Prakash, 411013 Pune, Maharashtra (IN)
(74) Representative: Goddar, Heinz J.

(56) References cited:
- US-A1- 2007 281 690
- US-A1- 2009 237 263
- US-A1- 2012 323 992
- US-A1- 2015 135 114

## Description

### Priority Claim

This present application claims priority from: Indian Application No. 201621038395 filed on November 10th, 2016.

### Technical Field

The embodiments herein generally relate to electronic maps, and more particularly to systems and methods for generating customized maps with real time messages and locations from concurrent users.

### Background

Conventionally known systems and methods for customized map generation cater to a single user at a given time for a map of a particular area of interest. Also, using conventional methods of communication employed between a single user device and database server via HTML protocol, it is a challenge to share data between multiple database servers, display devices and location acquiring devices. Besides catering to multiple users concurrently, real time updating of the custom maps based on user locations and user messages and sharing of such information across a set of users is not addressed. Again rendering of maps in the form of raster images make dynamic updating in real time another challenge to be addressed.

US2012/323992 teaches techniques for rendering geographic information system (GIS) data.

US2009/237263 teaches a system and method for determining a distance of a utility asset from a moving equipment.

US2015/135114 teaches a method and apparatus for rendering geographic areas.

US20070281690A1 teaches displaying and tagging places of interest on location-aware mobile communication devices in a local area network.

### SUMMARY

Embodiments of the present disclosure present technological improvements as solutions to one or more of the above-mentioned technical problems recognized by the inventors in conventional systems.

The invention is defined by a processor implemented method, according to independent claim 1, a system, according to independent claim 6 and a computer program product, according to independent claim 11,

Further embodiments are set out in the dependent claims.

It is to be understood that both the foregoing general description and the following detailed description are exemplary and explanatory only and are not restrictive of the scope of the invention, which is only defined by the appended claims.

### BRIEF DESCRIPTION OF THE DRAWINGS

The embodiments herein will be better understood from the following detailed description with reference to the drawings, in which:
**FIG.1** illustrates an exemplary schematic diagram of a client-server network architecture in a distributed enterprise network as known in the art;
**FIG.2** illustrates an exemplary block diagram of a client-server implementation of a system with functional modules for customized map generation in accordance with an embodiment of the present disclosure;
**FIG.3** is an exemplary flow diagram illustrating a computer implemented method for customized map generation in accordance with an embodiment of the present disclosure;
**FIG.4** illustrates an exemplary user interface for registration and updation of user location and messages in accordance with an embodiment of the present disclosure;
**FIG.5** illustrates an exemplary customized outline map having 2 Dimensional (2D) coordinates in accordance with an embodiment of the present disclosure;
**FIG.6** illustrates an exemplary customized outline map wherein a logged in user is tracked in accordance with an embodiment of the present disclosure; and
**FIG.7** illustrates an exemplary customized outline map wherein a group of logged in users are tracked in accordance with an embodiment of the present disclosure.

It should be appreciated by those skilled in the art that any block diagram herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computing device or processor, whether or not such computing device or processor is explicitly shown.

### DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible, provided they fall within the scope of the invention which is only defined by the appended claims.

Before setting forth the detailed explanation, it is noted that all of the discussion below, regardless of the particular implementation being described, is exemplary in nature, rather than limiting.

Systems and methods of the present disclosure enable creating outline map that are customized for each concurrent user, the maps being customized with static data in the form of map outline based on users' area of interests and landmarks associated with the area of interest; and dynamic data in the form of user locations and user messages. In an embodiment, the customized maps are shared across a group or a defined set of users based on pre-defined access criteria. In accordance with the present disclosure, the customized maps are rendered in a string format and not as a raster image as is conventionally known, thereby rendering the customized map dynamically. Furthermore, the customized maps are rendered by updating in real time only the dynamic content, thereby making the rendering of the customized maps more efficient.

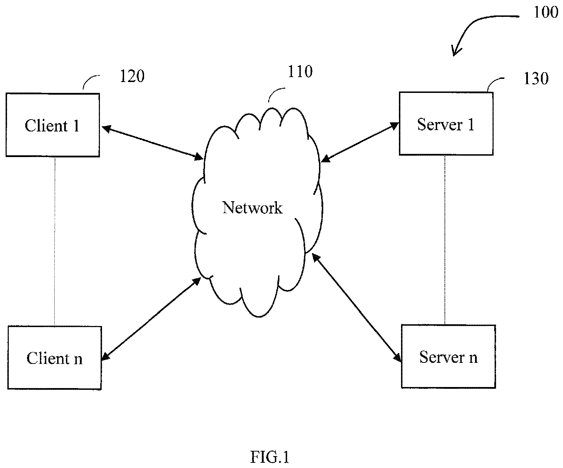

Referring now to the drawings, and more particularly to FIGS. 1 through 7, where similar reference characters denote corresponding features consistently throughout the figures, there are shown preferred embodiments and these embodiments are described in the context of the following exemplary system and method.

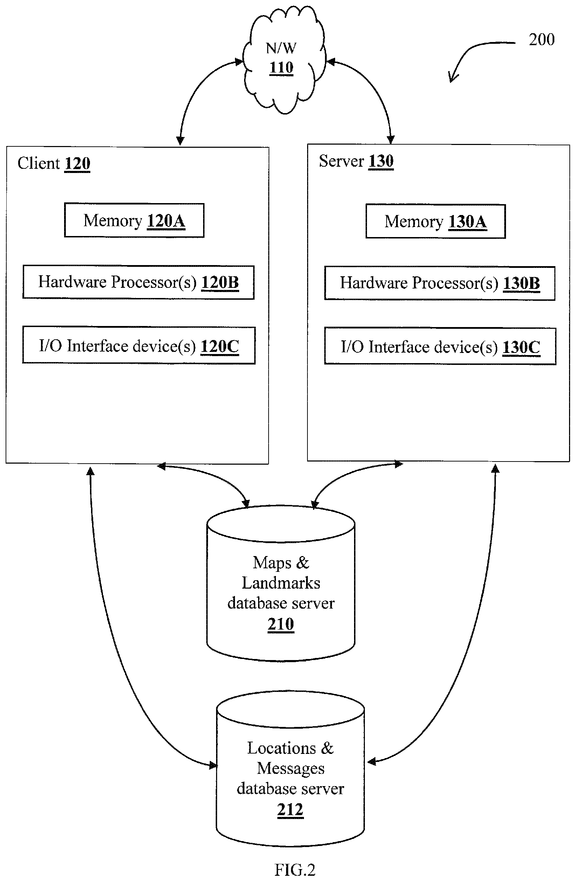

FIG. 1 illustrates an exemplary schematic representation of a client-server network architecture 100 in a distributed enterprise network, in accordance with an embodiment of the present disclosure and FIG. 2 illustrates an exemplary block diagram of a client-server system 200 with exemplary functional modules for customized map generation in accordance with an embodiment of the present disclosure. In an embodiment, the client server system 200 may include a client 120 in communication with a server 130 via a network 110.

In an embodiment, the system 200 can be implemented involving a variety of computing systems, such as a laptop computer, a desktop computer, a notebook, a workstation, a mainframe computer, a server, a network server, cloud, hand-held device and the like. Computing systems constituting the client 120 are in communication with computing systems constituting server 130 via the network 110.

In an embodiment, the client 120 and the server 130 may include memory or one or more internal data storage devices 120A and 130A respectively, one or more hardware processors 120B and 130B respectively and communication interface or input/output (I/O) interface devices 120C and 130C respectively, wherein the memory or the one or more internal data storage devices 120A and 130A respectively are operatively coupled to the one or more processors 120B and 130B respectively.

The one or more hardware processors 120B and 130B may be implemented as one or more microprocessors, microcomputers, microcontrollers, digital signal processors, central processing units, state machines, graphics controllers, logic circuitries, and/or any devices that manipulate signals based on operational instructions. Among other capabilities, the hardware processor(s) 120B and 130B are configured to fetch and execute computer-readable instructions stored in the memory 120A and 130A.

The I/O interface devices 120C and 130C may include a variety of software and hardware interfaces, for example, a web interface, a graphical user interface, and the like and can facilitate multiple communications within a wide variety of networks 110 and protocol types, including wired networks, for example, LAN, cable, etc., and wireless networks, such as WLAN, cellular, or satellite. In an embodiment, the I/O interface devices 120C and 130C may include one or more ports for connecting the computing systems to one another or to another server.

The memory 120A and 130A may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 120A and 130A may include local memory employed during actual execution of program code, bulk storage, and cache memories which provide temporary storage of at least some program code in order to reduce the number of times code must be retrieved from bulk storage during execution. In an embodiment, the various functional modules of system client 120 and the server 130 may be stored in the memory 120A and 130A respectively.

In the context of the present disclosure, the system 200 may further comprise a maps and landmarks database server 210 and a locations and messages database server 212 operatively coupled to the client 120 and the server 130 and capable of transferring data over internet protocol to a display device. In an embodiment, the maps and a landmarks database server 210 serves as a repository of customized outline maps generated by the system 200 and landmarks identified by the system 200. In an embodiment, the location and messages database server 212 serves as a repository of user locations and messages or messages received from users corresponding to various locations. In an embodiment, the maps and landmarks database server 210 and the locations and messages database server 212 may be updated with data from publicly available database servers.

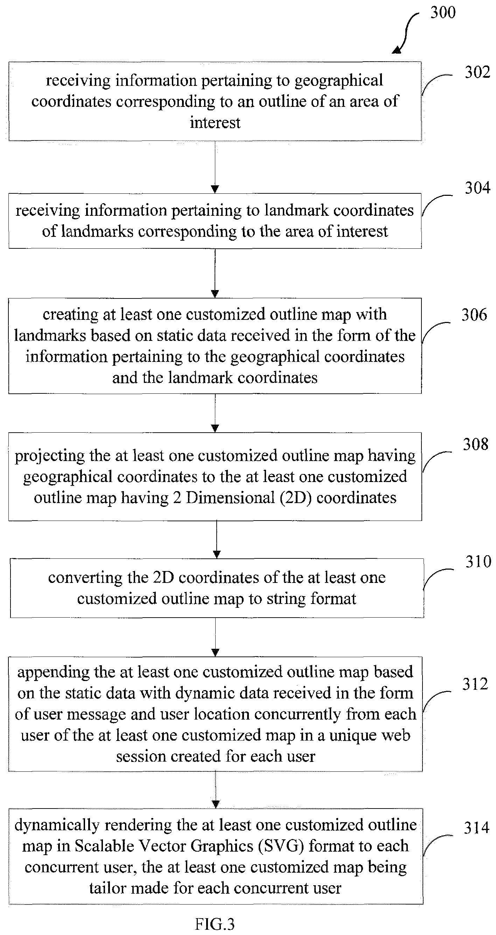

Although FIG.2 illustrates an exemplary distributed architecture for the system 200 of the present disclosure, in an embodiment, the functionalities of the client 120, the server 130, the maps and landmarks database server 210 and the location and messages database server 212 may be implemented in a single computing system with limited capabilities without taking advantage of the distributed nature of data in an enterprise. Systems and methods of the present disclosure will now be explained with reference to FIG.2 and FIG. 3 wherein FIG 3 is an exemplary flow diagram 300 illustrating a computer implemented method for customized map generation in accordance with the method of the present disclosure. In an embodiment, the system 200 comprises one or more data storage devices or memory 120A and 130A operatively coupled to the one or more hardware processors 120B and 130B respectively and are configured to store instructions configured for execution of steps of the method 300 by the one or more processors 120B and 130B respectively. For ease of explanation, a simplified version of the system 200 without the distributed architecture will be considered.

In an embodiment, at step 302, the one or more processors of the system 200 are configured to receive information pertaining to geographical coordinates corresponding to an outline of an area of interest. The geographical coordinates may be derived by the system 200 through various means. For instance, in an embodiment, the geographical coordinates may be obtained based on location information from a location acquiring device (not shown). In accordance with the present disclosure, the location acquiring device is a device that can transmit electronically the location obtained by Global Positioning System (GPS), Wi-Fi^{®}, Local Area Network (LAN), or a pre-stored static location. In another embodiment, the geographical coordinates may be obtained by projecting a map of the area of interest on a cartographic map such as Google^{™} map or Yahoo^{™} map. The map may be in jpg, png, svg, gpx or even xml format. In yet another embodiment, the geographical coordinates may be obtained based on text corresponding to the name of the area of interest. For instance, if *TCS Andheri* is an input, the system 200 may derive coordinates of TCS Andheri office from the Maps and Landmarks Database Server.

In an embodiment, at step 304, the one or more processors of the system 200 are configured to receive information pertaining to landmark coordinates of landmarks corresponding to the area of interest. The landmark coordinates may be derived by the system 200 through various means. In an embodiment, the landmark coordinates may be obtained based on text corresponding to the landmark name. For instance, if *Tunga International hotel* is an input, the system 200 may derive the landmark coordinates of Tunga International hotel from the Maps and Landmarks Database Server. In another embodiment, the landmark coordinates may be obtained by projecting a map of the landmark on a cartographic map such as Google^{™} map or Yahoo^{™} map. In yet another embodiment, the landmark coordinates may be estimated by a browser or a device based on location information from a location acquiring device.

In an embodiment, at step 306, the one or more processors of the system 200 are configured to create at least one customized outline map with landmarks based on static data received in the form of the information pertaining to the geographical coordinates and the landmark coordinates. Each of the concurrent users may request a different customized outline map for the same area of interest.

In an embodiment, at step 308, the one or more processors of the system 200 are configured to project the at least one customized outline map having geographical coordinates to the at least one customized outline map having 2 Dimensional (2D) coordinates. In an embodiment, at step 310, the one or more processors of the system 200 are configured to convert the 2D coordinates of the at least one customized outline map to a string format. Accordingly, in accordance with the present disclosure, a projection algorithm is used to convert the geographical location on a sphere to a 2D plane and further transformed to a display device coordinate system for visualization.

In an embodiment, at step 312, the one or more processors of the system 200 are configured to append the at least one customized outline map based on the static data with dynamic data received in the form of user messages and user locations concurrently from each user of the at least one customized map in a unique web session dynamically created for each user. In accordance with the present disclosure, the string format of the customized outline map enables creation of unique dynamic web sessions for each user.

In an embodiment, at step 314 the one or more processors of the system 200 are configured to dynamically render the at least one customized outline map in Scalable Vector Graphics (SVG) format to each concurrent user, the at least one customized map for each concurrent user. The at least one customized outline map may be rendered on a display device (not shown). The display device supports display of image and texts and is capable of processing Hyper Text Markup Language (HTML). In an embodiment, the display device and the location acquiring device may be implemented in a single device such as a smartphone.

In an embodiment, obtaining and converting geographical coordinates uses Mercator projection and the static and dynamic data are combined using Ajax methodology.

In an embodiment the step 314 of rendering the at least one customized map may be performed by a rendering engine (not shown) implementable on either the client 120 or the server 130 if the system 200 is implemented in a distributed architecture.

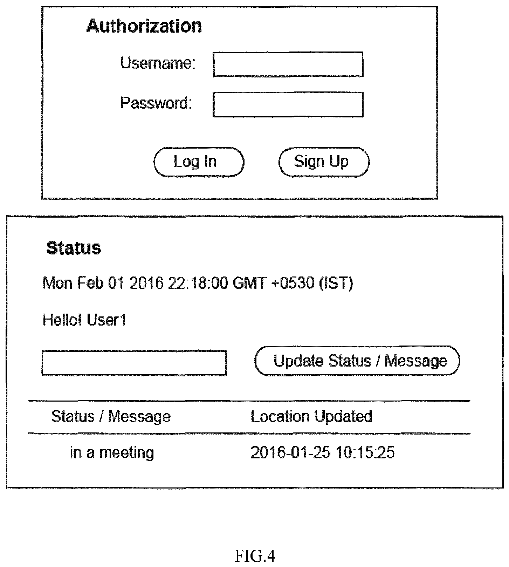

In an embodiment, the users may be required to register with the system 200. FIG.4 illustrates an exemplary user interface for registration and updation of user location and messages in accordance with an embodiment of the present disclosure. In an embodiment, the time of message may be updated along with the user location and user message.

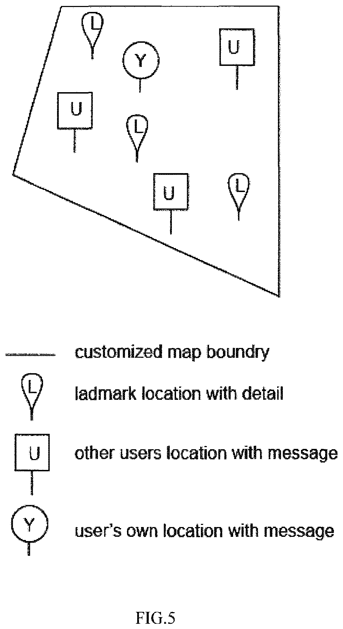

In an embodiment, the one or more processors of the system 200 may be configured to provide information on nearest landmark to the user location by computing distance from each landmark in the area of interest to the user location. FIG.5 illustrates an exemplary customized outline map having 2 Dimensional (2D) coordinates in accordance with an embodiment of the present disclosure. In the illustrated embodiment, a user desired outline map is created, wherein Y is representative of the logged in user's location. It may be annotated with messages provided by the user. U is representative of the other user's locations and associated messages. L is representative of landmarks in the area of interest. In an embodiment, the description of nearest landmark close to the user's current location may be prompted by audio or video means where the data is pre-stored in the maps and landmarks database server 210.

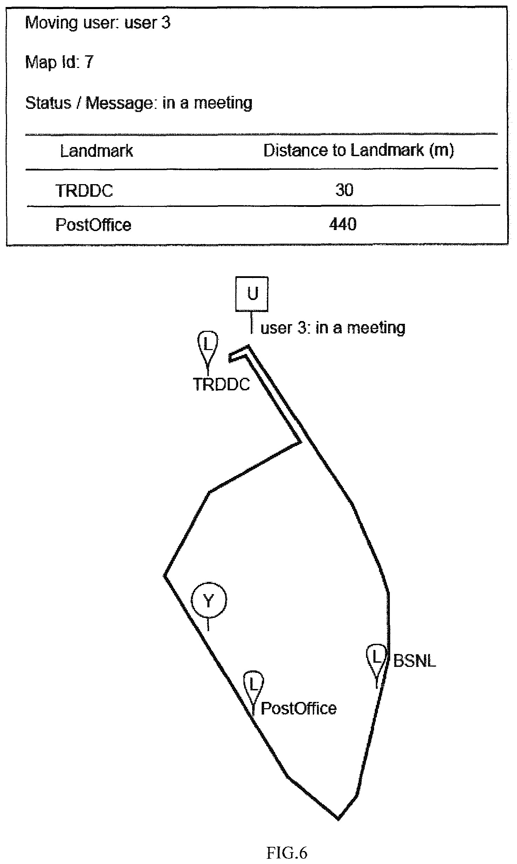

FIG.6 illustrates an exemplary customized outline map wherein a logged in user (user3) is tracked in accordance with an embodiment of the present disclosure. User message in the form of a status update *in a meeting* is displayed along with the user location. Landmarks TRDDC, BSNL and PostOffice are displayed in the area of interest. It may be seen from the illustration that the system 200 computes distances of the user3 from landmarks in the area of interest. An exemplary distance to landmark is shown in FIG.6 as 30 meters to the landmark TRDDC and 440 meters to the landmark PostOffice.

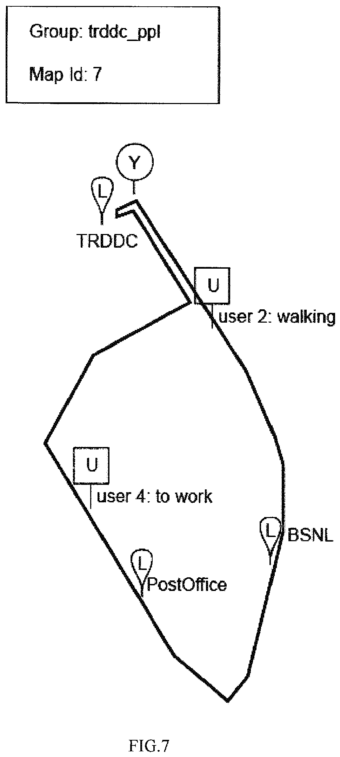

FIG.7 illustrates an exemplary customized outline map wherein a group of logged in users are tracked in accordance with an embodiment of the present disclosure. In the illustrated embodiment, a group trddc_ppl includes users user2 and user4. FIG. 7 shows location of the two users and messages associated with them. In the illustrated embodiment, distance to landmark has not been shown. In an embodiment, one or more users may have limited access to information. For instance, user4 in a group may be permitted access to the customized outline map only and may not be able to view location of user2. Alternatively, user4 may have no access to the customized outline map created by user2. Such access restrictions may be possible across users registered with the system 200 and not necessarily limited to a group registered with the system 200. In an embodiment, users may associated with varying privileges. For instance, a user with administrative privilege may be authorized to add or remove a user from a group. In another embodiment, a user with administrative privilege may be authorized to edit the customized outline map and landmarks with their associated descriptions.

In an embodiment, the expression "user" may refer to "vehicle". Accordingly, vehicles or a group of vehicles may be tracked in an area of interest.

In an embodiment, the system 200 ensure efficient use of resources by updating only the dynamic data of the customized outline map in the event that there is no change in the outline map. Accordingly, user location, user messages, additional users present or absent in the area of interest may be updated without updating the webpage with static data that comprises the geographical coordinates and the landmark coordinates associated with the area of interest. In accordance with the present disclosure, the registered user location may be tracked on a number of customized maps, wherein each customized map may be associated with a different outline map. For instance, a user may be tracked on an outline map of TCS Andheri. The same user may be tracked on an outline map of Mumbai or an outline map of India. In an embodiment, different outline maps available for tracking the user may be displayed on a webpage and selectable by the user, they may be shared as clickable links via email or may be saved as favorites in a browser. Accordingly, the customized outline map may be projected or overlaid on a cartographic map. In an embodiment, the customized map may be zoomed in or zoomed out at any particular location on the map.

The systems and methods of the present disclosure thus enable generating customized online maps concurrently for each user and update them with dynamic data in the form of user locations and user messages. The systems and methods of the present disclosure may find application in healthcare, mining, transportation, logistics, travel, search and rescue where users' messages and locations are shared over a customized targeted maps. These maps and landmarks are editable in real-time for sharing between users. Systems and methods of the present disclosure may be applicable to indoor maps as well. For instance, users may be tracked in an indoor exhibition center outline map. Another exemplary application, is a hospital undergoing renovation wherein available maps may not necessarily depict a true scenario of the location. Customized outline maps with landmarks of various specialty centers housed therein may be helpful to other users in the vicinity and wanting to visit a particular specialty center in the hospital. The generated customized outline maps and landmarks are editable in real-time for sharing between users.

The written description describes the subject matter herein to enable any person skilled in the art to make and use the embodiments of the present disclosure. Modifications that occur to those skilled in the art may be made, as long as they fall within the scope of invention which is only defined by the appended claims.

It is, however to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments of the present disclosure may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules comprising the system of the present disclosure and described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The various modules described herein may be implemented as software and/or hardware modules and may be stored in any type of non-transitory computer readable medium or other storage device. Some nonlimiting examples of non-transitory computer-readable media include CDs, DVDs, BLU-RAY, flash memory, and hard disk drives.

Further, although process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein, provided that these alternatives fall within the scope of the invention which is only defined by the appended claims.

## Claims

1. A processor implemented method (300), comprising
receiving information pertaining to geographical coordinates corresponding to an outline of an area of interest (302);
receiving information pertaining to landmark coordinates of landmarks corresponding to the area of interest (304);
creating at least one customized outline map with landmarks based on static data received in the form of the information pertaining to the geographical coordinates and the landmark coordinates (306);
projecting the at least one customized outline map having geographical coordinates to the at least one customized outline map having 2 Dimensional, 2D, coordinates (308);
converting the 2D coordinates of the at least one customized outline map to string format, wherein the string format of the customized outline map enables dynamic creation of a unique web session for each user of multiple users (310);
appending the at least one customized outline map based on the static data with dynamic data received in the form of user messages and user locations concurrently from each user of the at least one customized map in the unique web session dynamically created for each user (312), wherein the user messages comprise status updates of the user, wherein the at least one customized outline map of each concurrent user is editable in real-time for sharing between the multiple users and tracking each user on the at least one customized outline map within the area of interest;
dynamically rendering the at least one customized outline map in Scalable Vector Graphics, SVG, format to each concurrent user, the at least one customized map for each concurrent user(314); and
updating only the dynamic data including the user messages and the user locations of the at least one customized outline map when there is no change in the at least one customized outline map.

2. The processor implemented method of claim 1, wherein the step of receiving information pertaining to geographical coordinates comprises receiving at least one of:
plurality of geographical coordinates associated with the outline of the area of interest based on location information from a location identifier device;
plurality of geographical coordinates associated with the outline of the area of interest obtained by projecting a map of the area of interest on a cartographic map; and
plurality of geographical coordinates associated with the outline of the area of interest obtained based on text corresponding to the name of the area of interest.

3. The processor implemented method of claim 1, wherein the step of receiving information pertaining to landmark coordinates comprises receiving at least one of:
landmark coordinates obtained based on text corresponding to the landmark name;
landmark coordinates obtained by projecting a map of the landmark on a cartographic map; and
landmark coordinates estimated by a browser based on location information from a location identifier device.

4. The processor implemented method of claim 1 further comprising:
computing distance from each landmark in the area of interest to the user location; and
prompting the user of nearest landmark to the user location based on the computed distance.

5. The processor implemented method of claim 1 further comprising restricting access to the at least one customized outline map to one or more users.

6. A system (200), comprising
one or more data storage devices (120A, 130A) operatively coupled to one or more hardware processors (120B, 130B) and configured to store instructions configured for execution by the one or more hardware processors (120B, 130B) to:
receive information pertaining to geographical coordinates corresponding to an outline of an area of interest;
receive information pertaining to landmark coordinates of landmarks corresponding to the area of interest;
create at least one customized outline map with landmarks based on static data received in the form of the information pertaining to the geographical coordinates and the landmark coordinates;
project the at least one customized outline map having geographical coordinates to the at least one customized outline map having 2 Dimensional, 2D, coordinates;
convert the 2D coordinates of the at least one customized outline map to string format, wherein the string format of the customized outline map enables dynamic creation of a unique web session for each user of multiple users;
append the at least one customized outline map based on the static data with dynamic data received in the form of user message and user location concurrently from each user of the at least one customized map in the unique web session dynamically created for each user, wherein the at least one customized outline map of each concurrent user is editable in real-time for sharing between the multiple users and tracking each user on the at least one customized outline map within the area of interest;
dynamically render the at least one customized outline map in Scalable Vector Graphics, SVG, format to each concurrent user, the at least one customized map for each concurrent user; and
update only the dynamic data including the user messages and the user locations of the at least one customized outline map when there is no change in the at least one customized outline map.

7. The system (200) of claim 6, wherein the one or more hardware processors (120B, 130B) are further configured to receive information pertaining to geographical coordinates in the form of at least one of:
plurality of geographical coordinates associated with the outline of the area of interest based on location information from a location identifier device;
plurality of geographical coordinates associated with the outline of the area of interest obtained by projecting a map of the area of interest on a cartographic map; and
plurality of geographical coordinates associated with the outline of the area of interest obtained based on text corresponding to the name of the area of interest.

8. The system (200) of claim 6, wherein the one or more hardware processors (120B, 130B) are further configured to receive information pertaining to landmark coordinates in the form of at least one of:
landmark coordinates obtained based on text corresponding to the landmark name;
landmark coordinates obtained by projecting a map of the landmark on a cartographic map; and
landmark coordinates estimated by a browser based on location information from a location identifier device.

9. The system (200) of claim 6, wherein the one or more hardware processors (120B, 130B) are further configured to:
compute distance from each landmark in the area of interest to the user location; and
prompt the user of nearest landmark to the user location based on the computed distance.

10. The system (200) of claim 6, wherein the one or more hardware processors (120B, 130B) are further configured to restrict access to the at least one customized outline map to one or more users.

11. A computer program product comprising a non-transitory computer readable medium having a computer readable program embodied therein, wherein the computer readable program, when executed on a computing device, causes the computing device to:
receive information pertaining to geographical coordinates corresponding to an outline of an area of interest;
receive information pertaining to landmark coordinates of landmarks corresponding to the area of interest;
create at least one customized outline map with landmarks based on static data received in the form of the information pertaining to the geographical coordinates and the landmark coordinates;
project the at least one customized outline map having geographical coordinates to the at least one customized outline map having 2 Dimensional, 2D, coordinates;
convert the 2D coordinates of the at least one customized outline map to string format, wherein the string format of the customized outline map enables dynamic creation of a unique web session for each user of multiple users;
append the at least one customized outline map based on the static data with dynamic data received in the form of user messages and user locations concurrently from each user of the at least one customized map in the unique web session dynamically created for each user, wherein the at least one customized outline map of each concurrent user is editable in real-time for sharing between the multiple users and tracking each user on the at least one customized outline map within the area of interest;
dynamically render the at least one customized outline map in Scalable Vector Graphics, SVG, format to each concurrent user, the at least one customized map for each concurrent user; and
update only the dynamic data including the user messages and the user locations of the at least one customized outline map when there is no change in the at least one customized outline map.

12. The computer program product of claim 11, wherein the computer readable program further causes the computing device to:
compute distance from each landmark in the area of interest to the user location; and
prompt the user of nearest landmark to the user location based on the computed distance.

## Patentansprüche

1. Prozessorimplementiertes Verfahren (300), umfassend:
Empfangen von Informationen, die geographische Koordinaten betreffen, die einer Kontur eines interessierenden Bereichs (302) entsprechen;
Empfangen von Informationen, die Orientierungspunktkoordinaten von Orientierungspunkten betreffen, die dem interessierenden Bereich (304) entsprechen;
Erstellen mindestens einer kundenspezifischen Konturkarte mit Orientierungspunkten basierend auf statischen Daten, die in Form der Informationen empfangen werden, die die geographischen Koordinaten und die Orientierungspunktkoordinaten betreffen (306);
Projizieren der mindestens einen kundenspezifischen Konturkarte mit geographischen Koordinaten auf die mindestens eine kundenspezifische Konturkarte mit 2-dimensionalen, 2D, Koordinaten (308);
Umwandeln der 2D-Koordinaten der mindestens einen kundenspezifischen Konturkarte in ein Stringformat, wobei das Stringformat der kundenspezifischen Konturkarte eine dynamische Erstellung einer eindeutigen Websitzung für jeden Benutzer von mehreren Benutzern ermöglicht (310);
Anhängen der mindestens einen kundenspezifischen Konturkarte basierend auf den statischen Daten mit dynamischen Daten, die in Form von Benutzernachrichten und Benutzerstandorten gleichzeitig von jedem Benutzer der mindestens einen kundenspezifischen Karte in der eindeutigen Websitzung empfangen werden, die dynamisch für jeden Benutzer erstellt wird (312), wobei die Benutzernachrichten Statusaktualisierungen des Benutzers umfassen, wobei die mindestens eine kundenspezifische Konturkarte jedes gleichzeitigen Benutzers in Echtzeit zum Teilen zwischen den mehreren Benutzern und Verfolgen jedes Benutzers auf der mindestens einen kundenspezifischen Konturkarte innerhalb des interessierenden Bereichs editierbar ist;
dynamisches Rendern der mindestens einen kundenspezifischen Konturkarte in einem skalierbaren Vektorgrafik-, SVG-, Format für jeden gleichzeitigen Benutzer, wobei die mindestens eine kundenspezifische Karte für jeden gleichzeitigen Benutzer erstellt wird (314); und
Aktualisieren nur der dynamischen Daten einschließlich der Benutzernachrichten und der Benutzerstandorte der mindestens einen kundenspezifischen Konturkarte, wenn keine Änderung in der mindestens einen kundenspezifischen Konturkarte vorliegt.

2. Prozessorimplementiertes Verfahren nach Anspruch 1, wobei der Schritt des Empfangens von Informationen, die geographische Koordinaten betreffen, das Empfangen von mindestens einem von Folgendem umfasst:
Mehrzahl von geographischen Koordinaten, die der Kontur des interessierenden Bereichs zugeordnet sind, basierend auf Standortinformationen von einer Standortkennungsvorrichtung;
Mehrzahl von geographischen Koordinaten, die der Kontur des interessierenden Bereichs zugeordnet sind, die durch Projizieren einer Karte des interessierenden Bereichs auf eine kartographische Karte erhalten werden; und
Mehrzahl von geographischen Koordinaten, die der Kontur des interessierenden Bereichs zugeordnet sind, die basierend auf Text erhalten werden, der dem Namen des interessierenden Bereichs entspricht.

3. Prozessorimplementiertes Verfahren nach Anspruch 1, wobei der Schritt des Empfangens von Informationen, die Orientierungspunktkoordinaten betreffen, das Empfangen von mindestens einem von Folgendem umfasst:
Orientierungspunktkoordinaten, die basierend auf Text erhalten werden, der dem Orientierungspunktnamen entspricht;
Orientierungspunktkoordinaten, die durch Projizieren einer Karte des Orientierungspunkts auf eine kartographische Karte erhalten werden; und
Orientierungspunktkoordinaten, die durch einen Browser basierend auf Standortinformationen von einer Standortkennungsvorrichtung geschätzt werden.

4. Prozessorimplementiertes Verfahren nach Anspruch 1, ferner umfassend:
Berechnen einer Entfernung von jedem Orientierungspunkt in dem interessierenden Bereich zu dem Benutzerstandort; und
Auffordern des Benutzers des nächstgelegenen Orientierungspunkts zu dem Benutzerstandort basierend auf der berechneten Entfernung.

5. Prozessorimplementiertes Verfahren nach Anspruch 1, ferner umfassend das Beschränken des Zugriffs auf die mindestens eine kundenspezifische Umrisskarte auf einen oder mehrere Benutzer.

6. System (200), umfassend:
eine oder mehrere Datenspeichervorrichtungen (120A, 130A), die betriebsfähig mit einem oder mehreren Hardwareprozessoren (120B, 130B) gekoppelt und konfiguriert sind, um Anweisungen zu speichern, die zur Ausführung durch den einen oder die mehreren Hardwareprozessoren (120B, 130B) konfiguriert sind zum:
Empfangen von Informationen, die geographische Koordinaten betreffen, die einer Kontur eines interessierenden Bereichs entsprechen;
Empfangen von Informationen, die Orientierungspunktkoordinaten von Orientierungspunkten betreffen, die dem interessierenden Bereich entsprechen;
Erstellen mindestens einer kundenspezifischen Konturkarte mit Orientierungspunkten basierend auf statischen Daten, die in Form der Informationen empfangen werden, die die geographischen Koordinaten und die Orientierungspunktkoordinaten betreffen;
Projizieren der mindestens einen kundenspezifischen Konturkarte mit geographischen Koordinaten auf die mindestens eine kundenspezifische Konturkarte mit 2-dimensionalen, 2D, Koordinaten;
Umwandeln der 2D-Koordinaten der mindestens einen kundenspezifischen Konturkarte in ein Stringformat, wobei das Stringformat der kundenspezifischen Konturkarte eine dynamische Erstellung einer eindeutigen Websitzung für jeden Benutzer von mehreren Benutzern ermöglicht;
Anhängen der mindestens einen kundenspezifischen Konturkarte basierend auf den statischen Daten mit dynamischen Daten, die in Form von Benutzernachrichten und Benutzerstandorten gleichzeitig von jedem Benutzer der mindestens einen kundenspezifischen Karte in der eindeutigen Websitzung empfangen werden, die dynamisch für jeden Benutzer erstellt wird, wobei die mindestens eine kundenspezifische Konturkarte jedes gleichzeitigen Benutzers in Echtzeit zum Teilen zwischen den mehreren Benutzern und Verfolgen jedes Benutzers auf der mindestens einen kundenspezifischen Konturkarte innerhalb des interessierenden Bereichs editierbar ist;
dynamisches Rendern der mindestens einen kundenspezifischen Konturkarte in einem skalierbaren Vektorgrafik-, SVG-, Format für jeden gleichzeitigen Benutzer, wobei die mindestens eine kundenspezifische Karte für jeden gleichzeitigen Benutzer erstellt wird; und
Aktualisieren nur der dynamischen Daten einschließlich der Benutzernachrichten und der Benutzerstandorte der mindestens einen kundenspezifischen Konturkarte, wenn keine Änderung in der mindestens einen kundenspezifischen Konturkarte vorliegt.

7. System (200) nach Anspruch 6, wobei der eine oder die mehreren Hardwareprozessoren (120B, 130B) ferner konfiguriert sind, um Informationen, die geographische Koordinaten betreffen, in Form von mindestens einem von Folgendem zu empfangen:
Mehrzahl von geographischen Koordinaten, die der Kontur des interessierenden Bereichs zugeordnet sind, basierend auf Standortinformationen von einer Standortkennungsvorrichtung;
Mehrzahl von geographischen Koordinaten, die der Kontur des interessierenden Bereichs zugeordnet sind, die durch Projizieren einer Karte des interessierenden Bereichs auf eine kartographische Karte erhalten werden; und
Mehrzahl von geographischen Koordinaten, die der Kontur des interessierenden Bereichs zugeordnet sind, die basierend auf Text erhalten werden, der dem Namen des interessierenden Bereichs entspricht.

8. System (200) nach Anspruch 6, wobei der eine oder die mehreren Hardwareprozessoren (120B, 130B) ferner konfiguriert sind, um Informationen, die Orientierungspunktkoordinaten betreffen, in Form von mindestens einem von Folgendem zu empfangen:
Orientierungspunktkoordinaten, die basierend auf Text erhalten werden, der dem Orientierungspunktnamen entspricht;
Orientierungspunktkoordinaten, die durch Projizieren einer Karte des Orientierungspunkts auf eine kartographische Karte erhalten werden; und
Orientierungspunktkoordinaten, die durch einen Browser basierend auf Standortinformationen von einer Standortkennungsvorrichtung geschätzt werden.

9. System (200) nach Anspruch 6, wobei der eine oder die mehreren Hardwareprozessoren (120B, 130B) ferner konfiguriert sind zum:
Berechnen einer Entfernung von jedem Orientierungspunkt in dem interessierenden Bereich zu dem Benutzerstandort; und
Auffordern des Benutzers des nächstgelegenen Orientierungspunkts zu dem Benutzerstandort basierend auf der berechneten Entfernung.

10. System (200) nach Anspruch 6, wobei der eine oder die mehreren Hardwareprozessoren (120B, 130B) ferner konfiguriert sind, um den Zugriff auf die mindestens eine kundenspezifische Umrisskarte auf einen oder mehrere Benutzer zu beschränken.

11. Computerprogrammprodukt, umfassend ein nichtflüchtiges computerlesbares Medium mit einem darin enthaltenen computerlesbaren Programm, wobei das computerlesbare Programm, wenn es auf einer Rechenvorrichtung ausgeführt wird, die Rechenvorrichtung veranlasst zum:
Empfangen von Informationen, die geographische Koordinaten betreffen, die einer Kontur eines interessierenden Bereichs entsprechen;
Empfangen von Informationen, die Orientierungspunktkoordinaten von Orientierungspunkten betreffen, die dem interessierenden Bereich entsprechen;
Erstellen mindestens einer kundenspezifischen Konturkarte mit Orientierungspunkten basierend auf statischen Daten, die in Form der Informationen empfangen werden, die die geographischen Koordinaten und die Orientierungspunktkoordinaten betreffen;
Projizieren der mindestens einen kundenspezifischen Konturkarte mit geographischen Koordinaten auf die mindestens eine kundenspezifische Konturkarte mit 2-dimensionalen, 2D, Koordinaten;
Umwandeln der 2D-Koordinaten der mindestens einen kundenspezifischen Konturkarte in ein Stringformat, wobei das Stringformat der kundenspezifischen Konturkarte eine dynamische Erstellung einer eindeutigen Websitzung für jeden Benutzer von mehreren Benutzern ermöglicht;
Anhängen der mindestens einen kundenspezifischen Konturkarte basierend auf den statischen Daten mit dynamischen Daten, die in Form von Benutzernachrichten und Benutzerstandorten gleichzeitig von jedem Benutzer der mindestens einen kundenspezifischen Karte in der eindeutigen Websitzung empfangen werden, die dynamisch für jeden Benutzer erstellt wird, wobei die mindestens eine kundenspezifische Konturkarte jedes gleichzeitigen Benutzers in Echtzeit zum Teilen zwischen den mehreren Benutzern und Verfolgen jedes Benutzers auf der mindestens einen kundenspezifischen Konturkarte innerhalb des interessierenden Bereichs editierbar ist;
dynamisches Rendern der mindestens einen kundenspezifischen Konturkarte in einem skalierbaren Vektorgrafik-, SVG-, Format für jeden gleichzeitigen Benutzer, wobei die mindestens eine kundenspezifische Karte für jeden gleichzeitigen Benutzer erstellt wird; und
Aktualisieren nur der dynamischen Daten einschließlich der Benutzernachrichten und der Benutzerstandorte der mindestens einen kundenspezifischen Konturkarte, wenn keine Änderung in der mindestens einen kundenspezifischen Konturkarte vorliegt.

12. Computerprogrammprodukt nach Anspruch 11, wobei das computerlesbare Programm die Rechenvorrichtung ferner veranlasst zum:
Berechnen einer Entfernung von jedem Orientierungspunkt in dem interessierenden Bereich zu dem Benutzerstandort; und
Auffordern des Benutzers des nächstgelegenen Orientierungspunkts zu dem Benutzerstandort basierend auf der berechneten Entfernung.

## Revendications

1. Procédé mis en oeuvre par processeur (300), comprenant
la réception d'informations concernant des coordonnées géographiques correspondant à un contour d'une zone d'intérêt (302) ;
la réception d'informations concernant des coordonnées de point de repère de points de repère correspondant à la zone d'intérêt (304) ;
la création d'au moins une carte de contour personnalisée avec des points de repère sur la base de données statiques reçues sous la forme des informations concernant les coordonnées géographiques et les coordonnées de point de repère (306) ;
la projection de l'au moins une carte de contour personnalisée ayant de coordonnées géographiques sur l'au moins une carte de contour personnalisée ayant des coordonnées bidimensionnelles, 2D (308) ;
la conversion des coordonnées 2D de l'au moins une carte de contour personnalisée au format de chaîne, le format de chaîne de la carte de contour personnalisée permettant la création dynamique d'une session web unique pour chaque utilisateur parmi des utilisateurs multiples (310) ;
l'ajout de l'au moins une carte de contour personnalisée sur la base des données statiques avec des données dynamiques reçues sous la forme de messages d'utilisateur et d'emplacements d'utilisateur simultanément de chaque utilisateur de l'au moins une carte personnalisée dans la session web unique créée de façon dynamique pour chaque utilisateur (312), dans lequel les messages d'utilisateur comprennent des mises à jour d'état de l'utilisateur, dans lequel l'au moins une carte de contour personnalisée de chaque utilisateur simultané est modifiable en temps réel pour partager entre les utilisateurs multiples et suivre chaque utilisateur sur l'au moins une carte de contour personnalisée dans la zone d'intérêt ;
rendre de façon dynamique l'au moins une carte de contour personnalisée au format Scalable Vector Graphics, SVG, pour chaque utilisateur simultané, l'au moins une carte personnalisée étant pour chaque utilisateur simultané (314) ; et
mettre à jour uniquement les données dynamiques comprenant les messages d'utilisateur et les emplacements d'utilisateur de l'au moins une carte de contour personnalisée lorsqu'il n'y a pas de changement dans l'au moins une carte de contour personnalisée.

2. Procédé mis en oeuvre par processeur selon la revendication 1, dans lequel l'étape de réception d'informations concernant des coordonnées géographiques comprend la réception d'au moins l'un de :
une pluralité de coordonnées géographiques associées au contour de la zone d'intérêt sur la base d'informations d'emplacement provenant d'un dispositif identificateur d'emplacement ;
une pluralité de coordonnées géographiques associées au contour de la zone d'intérêt obtenu par projection d'une carte de la zone d'intérêt sur une carte cartographique ; et
une pluralité de coordonnées géographiques associées au contour de la zone d'intérêt obtenu sur la base de texte correspondant au nom de la zone d'intérêt.

3. Procédé mis en oeuvre par processeur selon la revendication 1, dans lequel l'étape de réception d'informations concernant des coordonnées de point de repère comprend la réception d'au moins l'un de :
coordonnées de point de repère obtenues sur la base de texte correspondant au nom du point de repère ;
coordonnées de point de repère obtenues par projection d'une carte du point de repère sur une carte cartographique ; et
coordonnées de point de repère estimées par un navigateur sur la base d'informations d'emplacement provenant d'un dispositif identificateur d'emplacement.

4. Procédé mis en oeuvre par processeur selon la revendication 1 comprenant en outre :
le calcul d'une distance de chaque point de repère dans la zone d'intérêt à l'emplacement d'utilisateur ; et
l'invitation de l'utilisateur du point de repère le plus proche à l'emplacement d'utilisateur sur la base de la distance calculée.

5. Procédé mis en oeuvre par processeur selon la revendication 1 comprenant en outre la restriction de l'accès à l'au moins une carte de contour personnalisée à un ou plusieurs utilisateurs.

6. Système (200), comprenant :
un ou plusieurs dispositifs de stockage de données (120A, 130A) fonctionnellement couplés à un ou plusieurs processeurs matériels (120B, 130B) et configurés pour stocker des instructions configurées pour exécution par les un ou plusieurs processeurs matériels (120B, 130B) pour:
recevoir des informations concernant des coordonnées géographiques correspondant à un contour d'une zone d'intérêt ;
recevoir des informations concernant des coordonnées de point de repère de points de repère correspondant à la zone d'intérêt ;
créer au moins une carte de contour personnalisée avec des points de repère sur la base de données statiques reçues sous la forme des informations concernant les coordonnées géographiques et les coordonnées de point de repère ;
projeter l'au moins une carte de contour personnalisée ayant des coordonnées géographiques sur l'au moins une carte de contour personnalisée ayant des coordonnées bidimensionnelles, 2D ;
convertir les coordonnées 2D de l'au moins une carte de contour personnalisée au format de chaîne, le format de chaîne de la carte de contour personnalisée permettant la création dynamique d'une session web unique pour chaque utilisateur parmi des utilisateurs multiples ;
ajouter l'au moins une carte de contour personnalisée sur la base des données statiques avec des données dynamiques reçues sous la forme de message d'utilisateur et d'emplacement d'utilisateur simultanément de chaque utilisateur de l'au moins une carte personnalisée dans la session web unique créée de façon dynamique pour chaque utilisateur, dans lequel l'au moins une carte de contour personnalisée de chaque utilisateur simultané est modifiable en temps réel pour partager entre les utilisateurs multiples et suivre chaque utilisateur sur l'au moins une carte de contour personnalisée dans la zone d'intérêt ; rendre de façon dynamique l'au moins une carte de contour personnalisée au format Scalable Vector Graphics, SVG, pour chaque utilisateur simultané, l'au moins une carte personnalisée étant pour chaque utilisateur simultané ; et
mettre à jour uniquement les données dynamiques comprenant les messages d'utilisateur et les emplacements d'utilisateur de l'au moins une carte de contour personnalisée lorsqu'il n'y a pas de changement dans l'au moins une carte de contour personnalisée.

7. Système (200) selon la revendication 6, dans lequel les un ou plusieurs processeurs matériels (120B, 130B) sont en outre configurés pour recevoir des informations concernant des coordonnées géographiques sous la forme d'au moins l'un de :
une pluralité de coordonnées géographiques associées au contour de la zone d'intérêt sur la base d'informations d'emplacement provenant d'un dispositif identificateur d'emplacement ;
une pluralité de coordonnées géographiques associées au contour de la zone d'intérêt obtenu par projection d'une carte de la zone d'intérêt sur une carte cartographique ; et
une pluralité de coordonnées géographiques associées au contour de la zone d'intérêt obtenu sur la base de texte correspondant au nom de la zone d'intérêt.

8. Système (200) selon la revendication 6, dans lequel les un ou plusieurs processeurs matériels (120B, 130B) sont en outre configurés pour recevoir des informations concernant des coordonnées de point de repère sous la forme d'au moins l'un de :
coordonnées de point de repère obtenues sur la base de texte correspondant au nom du point de repère ;
coordonnées de point de repère obtenues par projection d'une carte du point de repère sur une carte cartographique ; et
coordonnées de point de repère estimées par un navigateur sur la base d'informations d'emplacement provenant d'un dispositif identificateur d'emplacement.

9. Système (200) selon la revendication 6, dans lequel les un ou plusieurs processeurs matériels (120B, 130B) sont en outre configurés pour :
calculer une distance de chaque point de repère dans la zone d'intérêt à l'emplacement d'utilisateur ; et
inviter l'utilisateur du point de repère le plus proche à l'emplacement d'utilisateur sur la base de la distance calculée.

10. Système (200) selon la revendication 6, dans lequel les un ou plusieurs processeurs matériels (120B, 130B) sont en outre configurés pour restreindre l'accès à l'au moins une carte de contour personnalisée à un ou plusieurs utilisateurs.

11. Produit de programme informatique comprenant un support lisible par ordinateur non transitoire comportant un programme lisible par ordinateur inscrit dans celui-ci, dans lequel le programme lisible par ordinateur, lorsqu'il est exécuté sur un dispositif informatique, amène le dispositif informatique à :
recevoir des informations concernant des coordonnées géographiques correspondant à un contour d'une zone d'intérêt ;
recevoir des informations concernant des coordonnées de point de repère de points de repère correspondant à la zone d'intérêt ;
créer au moins une carte de contour personnalisée avec des points de repère sur la base de données statiques reçues sous la forme des informations concernant les coordonnées géographiques et les coordonnées de point de repère ;
projeter l'au moins une carte de contour personnalisée ayant des coordonnées géographiques sur l'au moins une carte de contour personnalisée ayant des coordonnées bidimensionnelles, 2D ;
convertir les coordonnées 2D de l'au moins une carte de contour personnalisée au format de chaîne, le format de chaîne de la carte de contour personnalisée permettant la création dynamique d'une session web unique pour chaque utilisateur parmi des utilisateurs multiples ;
ajouter l'au moins une carte de contour personnalisée sur la base des données statiques avec des données dynamiques reçues sous la forme de message d'utilisateur et d'emplacement d'utilisateur simultanément de chaque utilisateur de l'au moins une carte personnalisée dans la session web unique créée de façon dynamique pour chaque utilisateur, dans lequel l'au moins une carte de contour personnalisée de chaque utilisateur simultané est modifiable en temps réel pour partager entre les utilisateurs multiples et suivre chaque utilisateur sur l'au moins une carte de contour personnalisée dans la zone d'intérêt ; rendre de façon dynamique l'au moins une carte de contour personnalisée au format Scalable Vector Graphics, SVG, pour chaque utilisateur simultané, l'au moins une carte personnalisée étant pour chaque utilisateur simultané ; et
mettre à jour uniquement les données dynamiques comprenant les messages d'utilisateur et les emplacements d'utilisateur de l'au moins une carte de contour personnalisée lorsqu'il n'y a pas de changement dans l'au moins une carte de contour personnalisée.

12. Produit de programme informatique selon la revendication 11, le programme lisible par ordinateur amenant en outre le dispositif informatique à :
calculer une distance de chaque point de repère dans la zone d'intérêt à l'emplacement d'utilisateur ; et
inviter l'utilisateur du point de repère le plus proche à l'emplacement d'utilisateur sur la base de la distance calculée.
